# EUROPEAN PATENT APPLICATION

(11) **EP 2 031 833 A2**
(43) Date of publication of application: **04.03.2009**
(21) Application number: 08162717.6
(22) Date of filing: 20.08.2008
(51) Int. Cl.: H04L 29/08

(54) **Aircraft data network access for personal electronic devices**

(30) Priority: 27.08.2007 US 845539
(71) Applicant: Honeywell International Inc., Morristown, NJ 07962 (US)
(72) Inventor: True, Willard R., Kirkland, WA 98034 (US)
(74) Representative: Buckley, Guy Julian

(57) **Abstract**

A method for providing aircraft data link network access for personal electronic devices is disclosed. The method comprises processing communications data for a personal electronic device operating within an aircraft, translating the processed data as a communications management function of the aircraft, and routing the translated data between the personal electronic device and at least one external sub-network of an aircraft data link network.

## Description

### BACKGROUND

Typical aircraft have onboard communications systems which communicate with multiple external networks during the course of a flight. For example, many of these onboard communications systems send reporting data over an aircraft data link once the aircraft has landed or has taxied away from a gate. The reporting data can include updated flight plans, engine performance data, and software upgrades. To send and receive this reporting data, airlines are rapidly adopting off-the-shelf personal electronic devices for pilots and other aircraft personnel. These devices include dedicated electronic flight bags (EFBs) and other personal handheld computing devices.

Currently, to connect the personal electronic devices to existing aircraft data link networks includes a vendor providing custom software for using aircraft data links such as very high frequency (VHF) and satellite communications (SATCOM) over an Aircraft Communication Addressing and Reporting System (ACARS) network. However, the personal electronic devices require proprietary software components to support this data link. Alternatively, for existing INTERNET standards-based applications, the personal electronic device can be connected to an aircraft networking router using off-the-shelf networking components. However, these applications are not operable with any aeronautical mobile services (for example, the aeronautical mobile services defined in the Convention on International Civil Aviation and other relevant national aviation standards).

For the reasons stated above and for other reasons stated below which will become apparent to those skilled in the art upon reading and understanding the present specification, there is a need in the art for improvements in aircraft data network access for personal electronic devices.

### SUMMARY

The following specification discusses an aircraft data network access for personal electronic devices. This summary is made by way of example and not by way of limitation. It is merely provided to aid the reader in understanding some aspects of at least one embodiment described in the following specification.

Particularly, in one embodiment, a method for providing aircraft data link network access for personal electronic devices is disclosed. The method comprises processing communications data for a personal electronic device operating within an aircraft, translating the processed data as a communications management function of the aircraft, and routing the translated data between the personal electronic device and at least one external sub-network of an aircraft data link network.

### DRAWINGS

These and other features, aspects, and advantages are better understood with regard to the following description, appended claims, and accompanying drawings where:

FIG. 1 is a block diagram of an electronic system for aircraft data network access;

FIG. 2 is a flow diagram of a method for message routing and data uplink processing for personal electronic devices having aircraft data network access;

FIG. 3 is a flow diagram of a method for servicing data requests from a personal electronic device having aircraft data network access; and

FIG. 4 is a flow diagram of a method for communicating with personal electronic devices over an aircraft data link network.

The various described features are drawn to emphasize features relevant to the embodiments disclosed. Like reference characters denote like elements throughout the figures and text of the specification.

### DETAILED DESCRIPTION

Embodiments disclosed herein relate to aircraft data network access for personal electronic devices that translates communications data from existing aircraft data networks for use with the personal electronic devices discussed here. Examples of these personal electronic devices include, without limitation, dedicated electronic flight bags (EFBs), wireless mobile devices, personal digital assistants, and other personal handheld computers that communicate with an aircraft communications management unit (CMU). In at least one embodiment, the aircraft data network access discussed here initiates network access with various external communications networks to update information stored in the personal electronic devices in near real time. For example, in-flight communications data will be dynamically updated in the personal electronic device (that is, updated in near real time) for an aircrew to interpret at any flight phase during operation. In addition, the aircraft data network access discussed here provides secure access for only the personal electronic devices authorized to send and receive the aircraft communications data through the CMU of the aircraft.

The aircraft data network access discussed her comprises at least one software component implemented in the CMU or as at least a portion of a communications management function (CMF) in an integrated avionics communications system. Examples of the aircraft communications data suitable for access with the personal electronic devices discussed here include, without limitation, flight management system (FMS) database information, avionics display data downloads (including flight path weather and turbulence patterns), aircraft engine data, EFB data, Quick Access data, Flight Operations Quality Assurance (FOQA) data, in-flight entertainment data, Aeronautical Operational Control (AOC) data, Air Traffic Control (ATC) data, Aeronautical Telecommunications Network (ATN) data, and Aircraft Communications Addressing and Reporting System (ACARS) data.

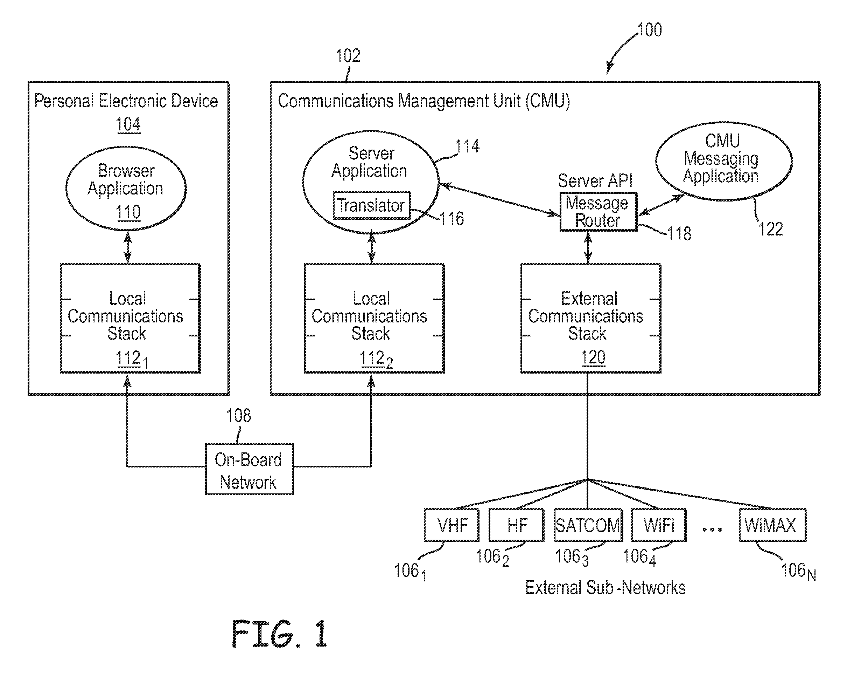

FIG. 1 is a block diagram of an electronic system 100 for aircraft data network access. The system 100 comprises a personal electronic device 104 (for example, an electronic flight bag, a wireless mobile device, a personal digital assistant, and the like) and a communications management unit (CMU) 102 including a message processing application 122 communicatively coupled to an external communications stack 120. In one implementation, the message processing application 122 is at least one of a flight management system, an aircraft condition monitoring system, an avionics display system, an in-flight entertainment system, and an avionics communications system. The message processing application 112 is capable of providing in-flight communication data to the personal electronic device 104 and routing messages from the personal electronic device 104 to external peripherals (for example, a printer) responsive to the CMU 102.

Moreover, the external communications stack 120 comprises an ACARS communications stack, an ATN communications stack, Transmission Control Protocol/Internet Protocol (TCP/IP) communications stack, or the like. The external communications stack 120 is responsive to a plurality of external sub-networks 106. In the example embodiment of FIG. 1, the plurality of external sub-networks 106 comprise a VHF radio network 106_{1,} a high frequency (HF) radio network 106₂, a satellite communications (SATCOM) network 106₃, a wide area network 106₄ (for example, WIFI), and a metropolitan area network 106_{N} (for example, WIMAX). It is understood that the system 100 is capable of accommodating any appropriate number of external sub-networks 106 (for example, the external sub-networks 106₁ to 106_{N} of FIG. 1) in a single system 100. Moreover, the external sub-networks 106 of FIG. 1 can comprise any appropriate air-to-ground, air-to-surface, and air-to-air sub-networks capable of communicating with an external communications stack similar to the external communications stack 120.

The CMU 102 further comprises a server application 114 responsive to the message processing application 122. In the example embodiment of FIG. 1, the server application 114 includes a translator function 116. The server application 114 is communicatively coupled to the message processing application 122 and the external communications stack 120 through a message router 118. In one implementation, the translator function 116 is an encoder/decoder and includes encryption and decryption of aircraft data link messages for the personal electronic device 104. The message router 118 is operable to route the aircraft data link messages to at least one of the messaging processing application 122 and the server application 114 over an application programming interface (API).

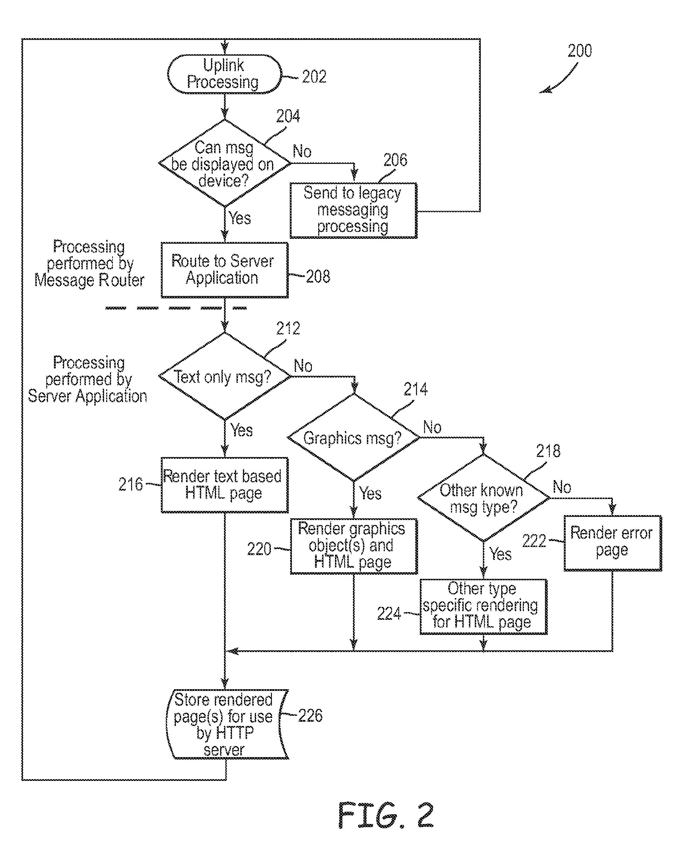

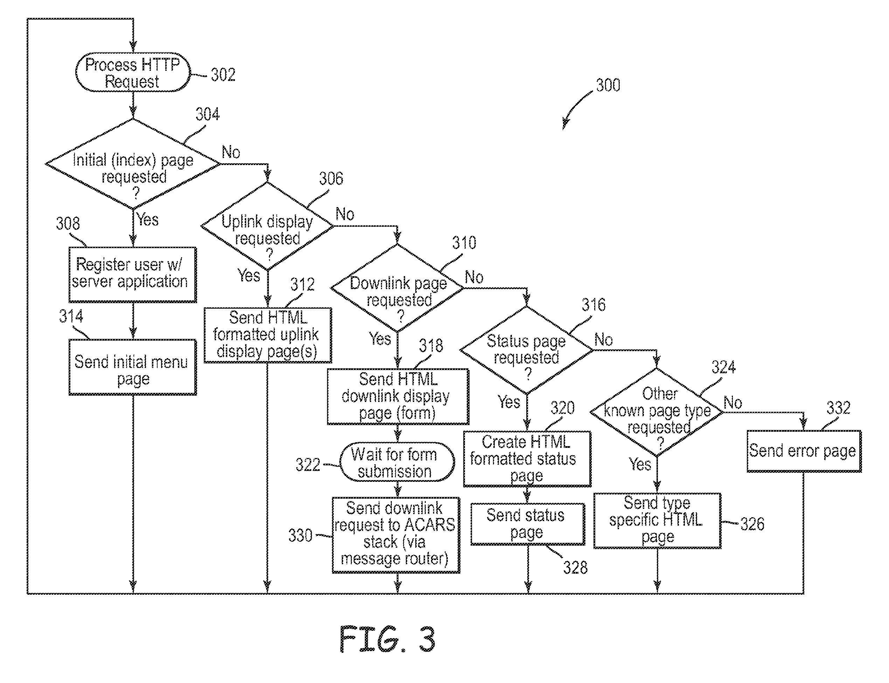

The personal electronic device 104 further comprises a browser application 110 having a first local communications stack 112₁. As discussed in further detail below with respect to FIGS. 2 and 3, the browser application 110 is operable to send and receive the aircraft data link messages as translated by the translator function 116 for the personal electronic device 104 through a secure network interface. In the example embodiment of FIG. 1, the secure network interface comprises an on-board local aircraft network 108. In one implementation, the on-board local aircraft network 108 is, without limitation, at least one of an Ethernet network, an Aeronautical Radio, Incorporated (ARNIC) network, and a wireless communications network operating within an aircraft (not shown) that incorporates the system 100. The on-board local aircraft network 108 is communicatively coupled to the local communications stack 112₁ of the personal electronic device 104 and to a local communications stack 112₂. The local communications stack 112₂ resides within the CMU 102 and is further responsive to the server application 114. As discussed below with respect to FIGS. 2 and 3, the server application 114 provides near real time confirmation of the aircraft data link messages communicated over the plurality of external sub-networks 106 for the personal electronic device 104.

It is understood that the communications stacks discussed here (for example, the external communications stack 120 and the local communications stacks 112) are considered to include at least three major partitions: a media layer, transport layer, and application layer. It is further understood that the aircraft data networking discussed here will implement a particular operating system or platform (for example, ACARS, ATN, TCP/IP, or the like) with at least two well-defined software interfaces: one between the media and the transport layers, and one between the transport layers and the aircraft data networking applications.

FIG. 2 is a flow diagram of a method 200 for message routing and data uplink processing for personal electronic devices having aircraft data network access (for example, the personal electronic device of FIG. 1). FIG. 3 is a flow diagram of a method 300 for servicing data requests from the personal electronic device having the aircraft data network access discussed here. Each of the methods illustrated in FIGS. 2 and 3 address providing aircraft data link network access for personal electronic devices. Using the methods of FIGS. 2 and 3, the aircraft data link network access discussed here processes communications data requests for each of the personal electronic devices operating within an aircraft, translates the processed data requests as a communications management function of the aircraft, and sends the translated data requests over at least one external sub-network of an aircraft data link network (for example, at least one of the plurality of external sub-networks 106 of FIG. 1).

The method of FIG. 2 starts the data uplink processing at block 202 by receiving a data uplink over the at least one of the plurality of external sub-networks 106 for the personal electronic device. If the message of the data uplink can be displayed on the personal electronic device (block 204), the communications management function routes the data uplink for further rendering to a server application in communication with the personal electronic device (block 208). For any message that will not be displayed on the personal electronic device, the message is sent to a CMU messaging application (similar to the CMU messaging application 122 of FIG. 1) for processing (blocks 206, 210).

For the data uplinks routed to the server application, the communications management function determines if the message is textual-only (block 212) and translates the message for use with the personal electronic device by rendering the text message into a format that the personal electronic device will recognize (for example, a hypertext markup language, or HTML, page) at block 216. If the message contains graphics (block 214), the communications management function translates the message for use with the personal electronic device by rendering each of the graphical objects into a format that the personal electronic device will recognize (block 220). For other known message types (block 218), the communications management function performs other message content type-specific rendering to translate the message for use into a format that the personal electronic device will recognize (block 224).

If the message type is not recognizable, the communications management function renders an error page (block 222). The rendered and translated page(s) are stored in the server application for communicating to the personal electronic device (block 226). In one implementation, the stored pages of FIG. 2 are continually processed by the server application (as described below with respect to FIG. 3) to provide near real time confirmation of data transmissions and data requests from the personal electronic device through the communications management function of the aircraft. FIG. 3 further effects a first display request of the personal electronic device as described below.

The method of FIG. 3 begins processing data link message requests at block 302. If the personal electronic device requests an initial (index) page from the communications management function (block 304), the communications management function registers the personal electronic device with the server application (block 308) and sends the initial menu page to the personal electronic device at block 314. If the personal electronic device requests an uplink display page (for example, a data uplink message from an external sub-network) from the communications management function (block 306), the communications management function sends a formatted uplink display page to the personal electronic device (block 312). In one implementation, the formatted uplink display page is rendered by the process discussed above with respect to FIG. 2.

If the personal electronic device requests a downlink display page (for example, to send a data downlink message to an external sub-network) from the communications management function (block 310), the server application sends a formatted downlink display page to the personal electronic device (block 318). Once the personal electronic devices submits the contents of the data downlink message (block 322), the server application send the data downlink message to an intended receiver (for example, at least one external sub-network or a CMU messaging application) using a message router function.

If a status page is requested by the personal electronic device on information presently available from the communications management function (block 316), the server application creates an appropriate status page based on (in one implementation) translated data from a translator function within the server application (block 320) prior to sending the status page with the requested information to the personal electronic device (block 328). For other known data requests (block 324), the server application sends at least one message content type-specific page to the personal electronic device (block 326). If a data request is unknown and is not able to be processed, the server application sends an error page to the personal electronic device (block 326).

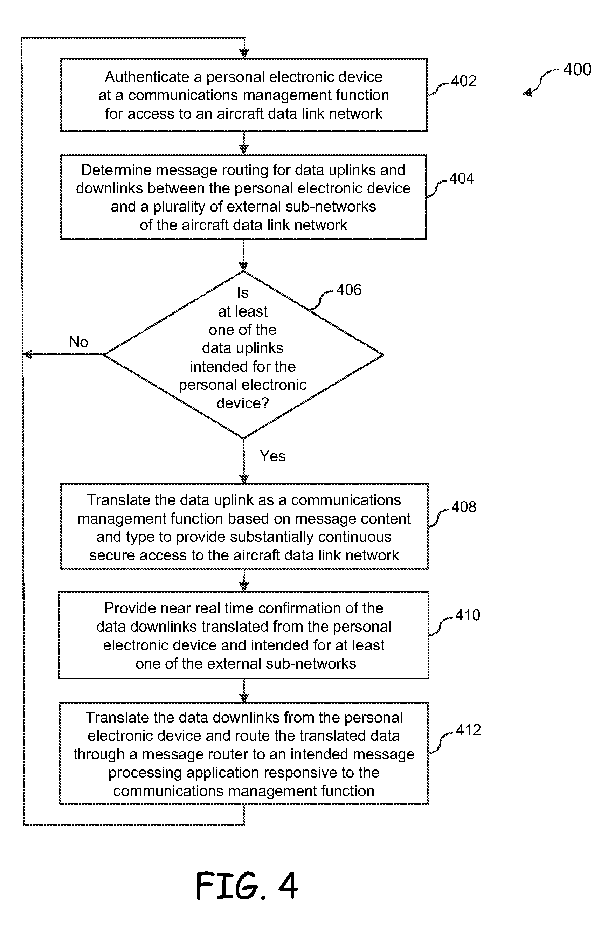

FIG. 4 is a flow diagram of a method 400 for communicating with personal electronic devices over an aircraft data link network. The method 400 addresses connecting the personal electronic devices with available aircraft data link networks. The personal electronic devices contemplated for use in the method discussed here require no modifications beyond any standard personal computing network applications presently provided. For example, the server application can use standard security functions including, but not limited to, Secure Sockets Layer (SSL), Transport Layer Security (TLS), or public key infrastructure (PKI) to authenticate the personal electronic device and to provide security for each networking session with the personal electronic device. In addition, the authentication contemplated here allows the personal electronic device to be connected on an open network on the aircraft and still securely access (for example) the CMU messaging application 122 of FIG. 1. Moreover, the aircraft data network access discussed here provides secure access to any avionics communications networks under consideration without modifications to the personal communications device.

The communications management function authenticates the personal electronic device for secure access to the aircraft data link network (block 402) and determines message routing for data uplinks and downlinks between the personal electronic device and a plurality of external sub-networks of the aircraft data link network (block 404). If at least one of the data uplinks is intended for the personal electronic device (block 406), the communications management function translates the data uplink based on message content and type to provide the personal electronic device with substantially continuous secure access to the aircraft data link network (block 408). In one implementation, the communications management function translates data downlinks from the personal electronic device to at least one of the external sub-networks (block 410) and to an intended message processing application within the communications management function (block 412). In turn, translating the data requests from the personal electronic device in the communications management function provides near real time confirmation of the data downlinks from the personal electronic device. The translated data from the personal electronic device intended for the message processing application is routed through a message router, similar to the message router 118 of FIG. 1.

While the embodiments disclosed have been described in the context of an electronic system for aircraft data networking applications, apparatus embodying these techniques are capable of being distributed in the form of a machine-readable medium of instructions and a variety of program products that apply equally regardless of the particular type of signal bearing media actually used to carry out the distribution. Examples of machine-readable media include recordable-type media, such as a portable memory device; a hard disk drive (HDD); a random-access memory (RAM); a read-only memory (ROM); transmission-type media, such as digital and analog communications links; and wired or wireless communications links using transmission forms, such as radio frequency and light wave transmissions. The variety of program products may take the form of coded formats that are decoded for actual use in a particular electronic system for aircraft data networking applications by a combination of digital electronic circuitry and software residing in a programmable processor (for example, a special-purpose processor or a general-purpose processor in a computer).

At least one embodiment disclosed herein can be implemented by computer-executable instructions, such as program product modules, which are executed by the programmable processor. Generally, the program product modules include routines, programs, objects, data components, data structures, and algorithms that perform particular tasks or implement particular abstract data types. The computer-executable instructions, the associated data structures, and the program product modules represent examples of executing the embodiments disclosed.

This description has been presented for purposes of illustration, and is not intended to be exhaustive or limited to the embodiments disclosed. Variations and modifications may occur, which fall within the scope of the following claims.

## Claims

1. An electronic system (100) for aircraft data network access, comprising:
a communications management unit (102) including:
a message processing application (122);
an external communications stack (120) communicatively coupled to the message processing application, the external communications stack responsive to at least one external sub-network (106); and
a server application (114) responsive to the message processing application, the server application having a translator function (116), wherein the server application provides near real time confirmation of the aircraft data link messages communicated over the at least one external sub-network; and
a first personal electronic device (104) including:
a browser application (110); and
a first local communications stack (112-1) responsive to the browser application, wherein the browser application is operable to send and receive aircraft data link messages between the at least one external sub-network as translated by the translator function and the first personal electronic device using a secure network interface (108).

2. The system of claim 1, wherein the communications management unit further comprises a message router (118) operable to route the aircraft data link messages to at least one of the messaging processing application and the server application.

3. The system of claim 1, wherein the first personal electronic device is one of an electronic flight bag, a wireless mobile device, or a personal digital assistant.

4. The system of claim 1, wherein the server application comprises a second local communications stack (112-2) responsive to the browser application through the secure network interface.

5. The system of claim 1, wherein the message processing application is at least one of a flight management system, an aircraft condition monitoring system, an avionics display system, an in-flight entertainment system, and an avionics communications system.

6. The system of claim 1, wherein the external communications stack is one of an aircraft communication and reporting system (ACARS) communications stack, an aeronautical telecommunications network (ATN) communications stack, or a Transmission Control Protocol/Internet Protocol (TCP/IP) communications stack.

7. The system of claim 1, wherein the at least one external sub-network is one of a very high frequency (VHF) radio network, a high frequency (HF) radio network, a satellite communications (SATCOM) network, a wide area network (WAN), or a metropolitan area network (MAN).

8. The system of claim 1, wherein the secure network interface comprises an on-board local aircraft network.

9. The system of claim 8, wherein the on-board local aircraft network is at least one of an Ethernet network, an Aeronautical Radio, Incorporated (ARNIC) network, and a wireless communications network.
